(19) Europäisches Patentamt
European Patent Office
Office européen des brevets

(11) **EP 2 312 506 A1**

(12) **EUROPEAN PATENT APPLICATION**

(43) Date of publication:
**20.04.2011 Bulletin 2011/16**

(51) Int Cl.:
***G06Q 10/00*** *(2006.01)*

(21) Application number: **09173228.9**

(22) Date of filing: **16.10.2009**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK SM TR**<br>Designated Extension States:<br>**AL BA RS** | • **Baltensperger, Christian**<br>  **CH-8708, Maennedorf (CH)**<br>• **Gelle, Esther**<br>  **CH-5453, Remetschwil (CH)**<br>• **Sadikovic, Rusejila**<br>  **CH-8102, Oberengstringen (CH)** |
| (71) Applicant: **ABB Technology AG**<br>**8050 Zürich (CH)** | (74) Representative: **ABB Patent Attorneys**<br>**C/o ABB Schweiz AG**<br>**Intellectual Property (CH-LC/IP)**<br>**Brown Boveri Strasse 6**<br>**CH-5400 Baden (CH)** |
| (72) Inventors:<br>• **Korba, Petr**<br>  **CH-5300, Turgi (CH)** | |

(54) **Computer-based method and device for automatically providing a prediction on a future energy demand to an energy source**

(57)     A computer-based method and a computing device for automatically providing a prediction on a future energy demand to an energy source are proposed. The method may be used for district heating prediction (DHP) including a heating source and comprises: a) acquiring actual measurement data of an actual ambient temperature and of an actual heating demand output of the heating source; b) updating a regressive model of the heating demand based on the acquired actual measurement data; c) acquiring forecasted ambient temperature data; d) calculating the prediction on the future heating demand using the updated regressive model and based on the acquired forecasted ambient temperature data; e) repeating steps (a) to (d). The method may be used to precisely predict a future heating demand e.g. to a district heating system thereby enabling efficient plant planning and/or enabling a forecast for marketable energy which predictably is not used for heating purposes and may therefore be converted e.g. into electricity.

Fig. 2

EP 2 312 506 A1

**Description**

**FIELD OF THE INVENTION**

The present invention relates to a computer-based method for automatically providing a prediction on a future energy demand to an energy source. Therein, as will be described later with respect to embodiments of the invention, the energy source may be a heating source as used e.g. in a district heating system. However, the energy source may also be any other kind of energy plant such as a hydro plant or a solar plant. The present invention also relates to a method of controlling an energy source. Furthermore, the present invention relates to a device and a computer program product adapted for performing such methods and a computer readable medium having stored thereon a respective computer program product.

**TECHNICAL BACKGROUND**

For an optimal operation of district heating systems, it may be necessary for energy companies to be able to plan a heat production. However, such a plan can only be created if a prediction of the heat demand is available. This can be done either automatically by a computer running an algorithm which can access past measurements and "knows" how to correlate them and turn into their future values or manually by an experienced operator. A prerequisite for an optimal heat production plan may be an a priori determination (i.e. prediction) of a heat amount required in the near future - usually for the next one till three days.

In some cases, district heat is generated by power plants for which district heat generation is the sole purpose. In these cases, district heating prediction (DHP) can help scheduling the production.

However, efficient operation of producing units in a district heating system is desirable not only due to direct operational costs. A further value of the DHP becomes apparent when the district heat is produced by a plant that also has alternative ways of selling the generated heat energy. In some plants, unused energy/capacity can be transformed into electricity and sold too.

Many methodologies have been proposed for heat demand prediction/forecasting. However, because of either lack of data or due to the uncertainties in their forecasts, many of the developed complex approaches fail in practice; if not completely then in the sense that their complexity can not be justified by the achieved precision.

**SUMMARY OF THE INVENTION**

It is an object of the present invention to provide a method and a device for reliably predicting a future energy demand to an energy source such as a district heating system and to possibly controlling the energy source based on the predicted demand, the method and a device using an algorithm with possibly low complexity and prediction error at the same time.

Such object may be solved by the subject matter of the independent claims. Embodiments of the invention are described in dependent claims.

According to an aspect of the present invention, a computer-based method for automatically providing a prediction on a future energy demand to an energy source is proposed, the method comprising the following steps preferably in the following order:

a) acquiring actual measurement data of an actual ambient condition and of an actual energy demand output of the energy source;

b) updating a regressive model of the energy demand based on the acquired actual measurement data;

c) acquiring forecasted ambient condition data;

d) calculating the prediction on the future energy demand using the updated regressive model and based on the acquired forecasted ambient condition data ;

e) repeating steps (a) to (d).

Therein, the energy demand may be a demand of any kind of energy, such as thermal energy, solar energy, hydrodynamic energy, etc., demanded e.g. from a group of consumers. Particularly, the energy demand may be a heating demand addressed e.g. to a district heating. The ambient conditions may be conditions affecting the energy demand. For example, the ambient conditions may be an ambient temperature affecting an actual heating demand. The actual measurement data of the actual ambient conditions and/or of the actual energy demand may be provided by sensors included or connected to the heating source. Alternatively, such actual measurement data may be provided by an external data provider.

For updating the regressive model, the acquired actual measurement data may be input into a computer system into which the model has been programmed.

The forecasted ambient condition data may be acquired for example from an external data provider specialized in providing weather forecasts.

The prediction on the future energy demand may then be calculated by using the updated regressive model with the data of the forecasted ambient condition data acquired previously. As it has been found that e.g. a future heating demand strongly depends from the ambient temperature prevailing at the specific future point in time and due to the advantageous characteristics of the selected regressive model (as will be described in more detail further below), a precise prediction on the future heating demand may be calculated.

By repeating the steps (a) to (d), the regressive model can be updated and predictions on future heating demands may be calculated continuously or at specific time intervals such as e.g. every day or even several times a day.

According to another aspect of the invention, a method of controlling an energy source may use a prediction on a future energy demand provided in accordance with the above-mentioned method in order to generate a production plan for controlling a energy generation of the energy source. The energy source may then be controlled in accordance with such generated production plan.

According to another aspect of the invention, a method of controlling an energy source of a power plant, such as a heating source of a thermal power plant or a combined thermal-electrical power plant, is provided. Such method includes the steps of providing a prediction on a future energy demand using the method as outlined above; determining a total energy quantity generated by the energy source; determining a difference value between the total energy quantity and the predicted future energy demand; and offering energy generated by the energy source in a quantity corresponding to the difference value for conversion into an alternative energy form such as for example electrical energy.

Accordingly, a portion of e.g. a total heat quantity generated by a heating source which will not be used for satisfying a predicted future heating demand may be offered for example to an energy stock market or may be provided to an energy conversion device such as for example a turbine-generator system in order to convert it to an alternative valuable energy form such as electricity.

According to another aspect of the invention, a computing device which is adapted for performing the above-described methods is proposed. The computing device may have one or more different data interfaces such as a local box, internet service, etc. e.g. for acquiring the forecasted ambient conditions data from an external data provider, for providing data of the calculated prediction on the future energy demand to an optimization system for automatically optimizing a production plan for the energy source or for providing data on a difference value between a total energy quantity generated by the energy source and a predicted future energy demand in order to use such difference value for external use such as for example for providing an offer at an energy spot market.

It has been found that the ambient temperature together with the social behavior of the consumers (also called "social component") usually have a most significant influence on the heat demand e.g. to a district heating whereas weather conditions like wind, global radiation (sunshine) or precipitation have rather less effect. According to embodiments of the present invention, both factors may be accounted for in approaches described herein.

A basic idea herein is to construct "one single demand curve" by combining weather forecast with historical load and weather curves using either linear difference equations, e.g. time series based on Auto Regressive models (AR), Auto Regressive models with Moving Average (ARMA), Auto Regressive models with Moving Average and eXternal input (ARMAX), Auto Regressive models with Integrated Moving Average eXternal input (ARIMAX), etc., or nonlinear difference equations, e.g. nonlinear ARMAX, neural networks etc. These result either from a discretization of ordinary differential equations (white box model) or from the simple fact that some discrete-time measurements are available (black-box model) as in the presented case. The step of calculating the prediction may be based on a combination of more than one regressive models (of the same type or different types mentioned above). For example, different regressive models may be used for different prevailing conditions or different time periods such as different week days or seasons.

The developed method is principally simple. As will become more apparent from the detailed description below, as a result, the most complex operation required to run the developed algorithm is a multiplication of a matrix by a vector and the achieved precision may be about 5% in terms of the so called mean average prediction error (MAPE). No further optimization routines are required here - unlike in case of many other approaches, e.g. those based on neural networks. The prediction problem is reduced to a parameter estimation problem which is solved explicitly through calculating a set of recursive equations which keep the model behavior "up-to-date". The best results have been achieved with the proposed model parameterization called "affine ARMAX".

A visible difference between the approach proposed here and other conventional approaches may be that it solves the entire prediction problem (incl. e.g. automated tracking of seasonal trends) without a need for additional filters tuned to remove the diurnal (24h) fundamental period and other trends from the measured signals.

It may be noted that herein, an important assumption to achieve very good prediction results is that the required measurements - i.e. in this particular case the ambient temperature and the heat demand - are correlated (as strongly as possible). Unfortunately, the correlation is not constant over the whole year. For example in summer, when all heating systems are automatically switched off (because of their local built-in outdoor temperature sensors giving feedbacks to their local/distributed controllers) the heat delivered by the utilities to the pipes can then only be consumed by connected hot water boilers; and this happens more or less randomly independently on the ambient temperature. Fortunately, this energy demand is very small and generally negligible for the utility. It also appears in the winter time but only as a negligible white noise on the top of the main heating demand curve. It cannot be predicted in the presented way and it contributes to the above mentioned 5% prediction error.

It has to be noted that aspects and embodiments of the present invention are described herein with reference to different subject-matters. In particular, some embodiments are described with reference to the method type claims whereas other embodiments are described with reference to apparatus type claims. However, a person skilled in the art will gather from the above and the following description that, unless other notified, in addition to any combination of features belonging to one type of subject-matter also any combination between features relating to different subject-matters, in particular between features of the apparatus type claims and features of the method type claims, is considered to be disclosed with this application.

## BRIEF DESCIRPTION OF THE DRAWINGS

Fig. 1 shows a graph representing a measured heat demand versus an ambient temperature.

Fig. 2 shows a district heating system comprising a computing device for performing a method according to an embodiment of the present invention.

Fig. 3 shows a flow-chart of a method according to an embodiment of the present invention.

The figures are schematically only.

## DETAILED DESCRIPTION OF EMBODIMENTS

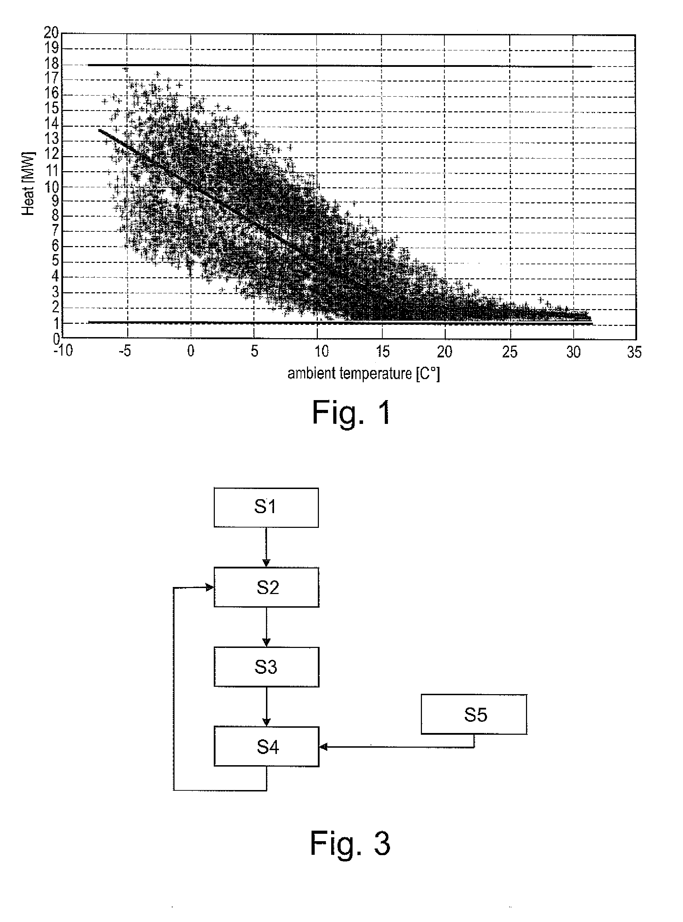

Fig. 1 shows measurement results of a demanded heat in dependence of an actual ambient temperature. From the measurement shown in this figure and further measurements, the following can be concluded:

- the heat demand varies slowly in a slightly non-linear way with the measured ambient temperature
- there are some outliers (clearly visible in Figure 1 under the solid 1MW line)
- one can easily identify the min. and max. values of heat demand as well as the break point of the non-linear characteristics and approximate it with a piece-wise linear one
- the daily profile varies rather less as a function of the concrete week-day
- the daily profile varies over the time of the year wherein with every month, one can expect a different daily profile. The above facts allow to believe that the assumption that an adaptive linear filter (or a small set of them) will give good prediction results.

An advantage of district heating prediction (DHP) becomes apparent e.g. when the district heat is produced by a plant that also has alternative ways of selling the generated heat energy. In some plants, unused energy/capacity can be transformed into electricity and sold too. As an example, a waste to energy plant generates steam that can be sold as district heat, as process steam, or—by the means of a turbine and a generator—as electricity. Obviously, the sum of all forms of sold (and lost) energy is "constant", i.e. it equals the total energy generation of the plant. This equation poses a problem in the situation where one energy form cannot be controlled but is instead controlled by the consumers, yet for one of the other energy forms, an accurate forecast is needed. In practice, this is often the case for district heating v. electricity: the district heating consumers simply drain as much energy as needed, depending on their heating needs, and what remains can be converted to electricity.

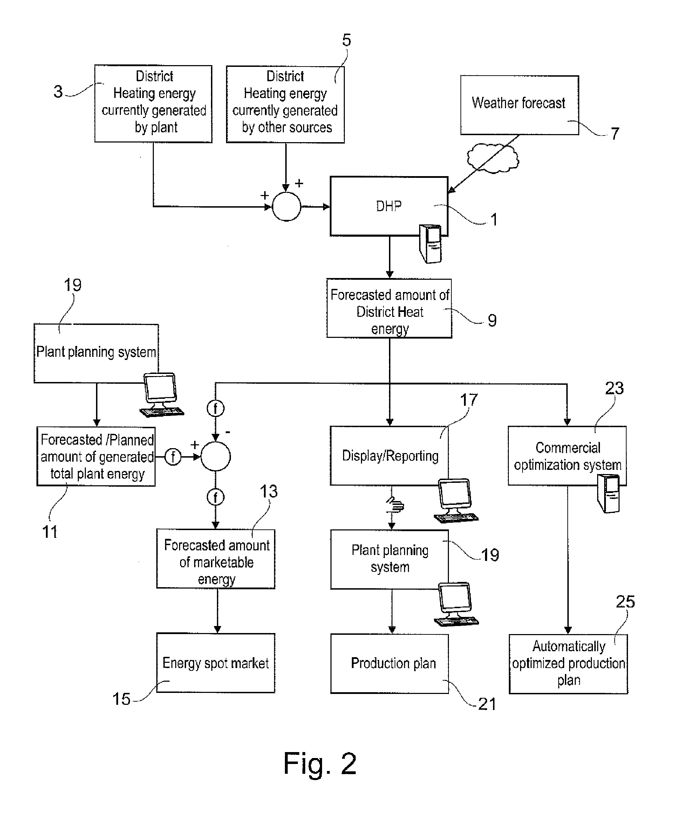

Hence, in order to forecast an amount of electricity which is needed for certain purposes, the forecasted amount of district heat must be determined first. The resulting system structure can have a form as shown in Figure 2:

As input, a computing device 1 serving as a district heating prediction device DHP needs to know all the district heat 3, 5 that is momentarily generated, be it by the heat plant itself or by some other means, e.g., an auxiliary boiler, as well as the weather forecast data 7 , typically to be collected via the Internet from a meteorological service. DHP then does its main task, namely, it figures out the forecasted amount of district heat energy, i.e. a future heating demand 9. This information is processed in one or more of the following ways, depending on the plant's control needs:

i.) The forecasted amount of district heat 9 is subtracted from the forecasted or planned amount of total energy 11 of the plant, possibly applying efficiency/conversion factors as needed. The result is the forecasted amount of marketable energy 13 of another form, usually electricity, which e.g. can be announced as committed amount to an energy trader, thus taking advantage of sometimes considerably high prices on an energy spot market 15. The accuracy of the forecast achieved by the DHP (a) allows announcing (= selling) the maximum amount of energy (since no or only narrow safety bands must be included) and (b) keeps the penalties for non-delivery at a minimum.

ii.) The forecasted amount of district heat 9 is displayed on an operator station 17. An operator working with a plant planning system 19 uses the value to generate a production plan 21. As the DHP adds accuracy to the forecasted amount of district heat, the production plan will become more accurate as well.

iii.) The forecasted amount of district heat 9 is fed into a fully automated commercial optimization system 23, which will by itself automatically generate an optimal plant production plan 25. Again, the accuracy of the production plan will be improved by the DHP.

An overall basic diagram of a developed algorithm is shown in Fig. 3. It can be decomposed into 5 single steps S1: Initialize system; S2: get new I/O measurements of ambient temperature (input) and heat demand (output); S3: update model based on recursive parameter estimation; S4: predict a heat output n steps ahead including freezing model parameters and reading a weather forecast provided in a separate step S5 and using the weather forecast as an input signal.
The core of the algorithm is based on steps S3 and S4. During the step S3, an affine ARMAX model (1) whose parameters are optimized recursively with every new set of input/output measurements [y(k),u(k)] using Kalman filtering techniques (described e.g. by the inventor in P. Korba "Real-Time Monitoring of Electromechanical Oscillations in Power Systems ", IEEE Proceedings, Generation Transmission and Distribution, vol. 1, pp. 80-88, 2007) in such a way that the variance of the prediction error (2) is minimized at any time k.

Model parameterization

The output signal is denoted as y. It stands in the solved problem for the heat demand. The input signal denoted as $u$ stands for the measured ambient temperature. The prediction of the measured y is denoted as $y$ .

$$\hat{y}(k+1) = -\sum_{i=0}^{na} a(k-i)\left[y(k-i)-o(k-i)\right] + \sum_{i=0}^{nb} b(k-i)u(k-i) + \sum_{i=0}^{nc} c(k-i)e(k-i) \quad (1)$$

$$\varepsilon(k) = \hat{y}(k) - y(k) \quad (2)$$

Eq. (1) can be directly rewritten as (3). Using a vector homogeneous transformation (6) and the corresponding extended vector of measurements (5), the resulting affine ARMAX model (3) can be written in the linear form (4), whose parameters (i.e. the vector θ) can be easily estimated with any linear parameter estimation techniques.

$$\hat{y}(k+1) = -\sum_{i=0}^{na} a(k-i)y(k-i) + \sum_{i=0}^{nb} b(k-i)u(k-i) + \sum_{i=0}^{nc} c(k-i)e(k-i) + \tilde{c} \quad (3)$$

$$\hat{y}(k+1) = \varphi^{T}(k)\theta(k) \tag{4}$$

where $\varphi$ given by (5) is the extended measurement vector and $\theta$ given by (6) comprises all estimated model parameters. The unknown constant offset $o(k) = ... =o(k\text{-}n)$ is related to the estimated parameter c and is given by (7).

$$\varphi^{T} = \left[- y(k),\ldots,-y(k-n),u(k),\ldots,u(k-m),e(k),\ldots,e(k-p),1\right] \tag{5}$$

$$\theta = \left[a(k),\ldots,a(k-n),b(k),\ldots,b(k-m),c(k),\ldots,c(k-p),\tilde{c}\right]^{T} \tag{6}$$

$$o(k) = o(k-1) = ... = o(k-n) = o = \frac{\tilde{c}}{\sum_{0}^{na} A_{i}(z,k)} \tag{7}$$

The polynomial A of order *na,* i.e. the complete set of estimated parameters related to the AR part of the ARMAX model, is given by (8) where the sum of $A_i$ stands in (7) for the sum of all its coefficients frozen in time *k*.

$$A(z,k) = z^{na} - a^{na-1}(k)z^{na-1} - ... - a^{0}(k) = \left[1,-a^{na-1}(k),\ldots,-a^{0}(k)\right]\left[z^{na}, z^{na-1},\ldots,1\right]^{T} \tag{8}$$

Note that the assumption for the simple relation (7) between *o* and *c* to hold is that *o* is constant over the last *na* sampling periods. The offset *o* has here the physical meaning of a *slowly varying trend* of the predicted signal and is estimated indirectly using the model (1).
The main characteristic of the described affine ARMAX model is its linearity in all estimated parameters and ability to capture/deal with the slowly varying trend. Corresponding equations in z-domain are given in (9)-(11).

$$A(z)\left[Y(z) - O(z)\right] = B(z)U(z) + C(z)E(z) \tag{9}$$

$$A(z)Y(z) = B(z)U(z) + C(z)E(z) + \tilde{c}(z) \tag{10}$$

$$c(\tilde{z}) = A(z)O(z) \tag{11}$$

### Model properties

The *social component/behavior* is captured mainly by the auto-regressive part of the employed affine ARMAX model *A(z)Y(z)* , see the left hand side of (9), and the *temperature dependent part* mainly by the input term *B(z)U(z)* , see the right hand side of (9).

The measurement error term *C(z)E(z)* is in practice difficult to form since the measurement error E(z) is in general unknown. In order to estimate C, a number of estimation procedures exist, however, which replace E(z) by an estimate usually taken to be the prediction error (2) to form (4) using (5). This term can be considered as simply "error" and skipped (not estimate at all). In general, however, the estimates of A(z) and B(z) generated in this way will be biased.

The above given model provides a direct description for $\hat{y}(k+1)$, i.e. a one-step-ahead prediction. The autoregressive term is justified from the physical consideration of the heat capacity and resultant inertia of the system. This term lowers the forecast accuracy as the prediction time progresses. Issuing at time k a *p-step* ahead forecast $\hat{y}(k + p|k)$, the frozen model used for forecasting is fed with the *(p-1)* forecasted $\hat{y}(k + p - 1|k)$. A consequence is that the forecasting error directly sums up as *p* increases. Hence in general, the precision of the heat demand prediction will inherently be indirectly proportional to the prediction horizon: In other words, the shorter the prediction, the higher precision can be achieved. Through the introduction of the offset term in eq. (3)-(6), the proposed approach does not need any further modifications or enhancements for adapting the social behavior through introduction of additional terms based on the known trends such as the diurnal 24h period, in order, for the heat demand forecast, to capture variations which do not depend only on the ambient temperature.

### Estimation of Model Parameters

Once, the core of the heat demand prediction problem has been formulated as a parameter estimation problem described by (1)-(7), the same type of a recursive algorithm as described in by the inventor in [P. Korba "Real-Time Monitoring of Electromechanical Oscillations in Power Systems", IET Proceedings, Generation Transmission and Distribution, vol. 1, pp. 80-88, 2007] can be used to solve it. The "engine" is based on a Kalman Filter and includes several extensions, incl. e.g. a regularized trace algorithm. The recursive update of the covariance matrix is enforced to remain symmetrical (there have not been observed any troubles with its *"positive definiteness"* - for this reason and for sake of possibly low complexity, "root square filter" approaches have been omitted here).

The developed engine is minimizing the variance of the prediction error according to the criterion (12) optimizing the set of estimated parameters (6) which have to go linear in to the considered model solving the set of recursive equations such as in (13) once per sampling period Ts.

$$J = \min_{\theta(k)} \varepsilon^T \varepsilon = \min_{\theta(k)} \left[ \hat{y}(k|k-1) - y(k) \right]^2 \tag{12}$$

$$d(k) = \varphi^T(k)K(k-1)\varphi(k) + Q_m$$

$$g(k) = K(k-1)\varphi(k)d(k)^{-1}$$

$$\hat{y}(k) = \varphi^T(k)\theta(k-1)$$

$$\varepsilon(k) = y(k) - \hat{y}(k)$$

$$\theta(k) = \theta(k-1) + \varepsilon(k)g(k)$$

$$K(k) = K(k-1) - g(k)\varphi^T K(k-1) + Q_p$$

(13)

Table 1: Variables of considered recursive estimation technique

| Variable | Description |
|---|---|
| (k) | Current time (iteration) |
| $\varphi(k)$ | Buffered measurements according to eq. (5) |
| y(k) | Last measured output = the desired model response at time step k |
| $\theta(k)$ | Vector of the estimated model parameters according to eq. (6) |
| $\varepsilon(k)$ | Prediction error at time step k |
| $\hat{y}(k)$ | Output estimated by the model at step k |
| K(k) | Covariance matrix (must be positive definite by definition) |
| g(k), d(k) | Vector of (Kalman) gains at step k and its denominator (which is to be inverted) |
| $Q_m$ | Measurement noise |
| $Q_p$ | Process noise |
| Note that in the considered procedure only one output signal is considered and therefore d(k) to be inverted is a scalar and the inversion corresponds to a division. | |

For the sake of numerical robustness, the above standard adaptive filtering algorithm is enhanced with the following terms:

$$1. \quad K(k) = \frac{K(k) + K^T(k)}{2} \qquad \text{(enforcing symmetry)}$$

This equation enforces the symmetry of the matrix K at each step. The meaning of the matrix K(k) can be interpreted as the correlation matrix of the estimation error. Hence, this matrix must always be positive definite by definition. However, this is not automatically guaranteed anywhere in the recursive procedure shown above. Enforcing symmetry is the first logical step into this direction. It is substantially simpler than guaranteeing positive definiteness.

$$2. \quad K(k) = c_1 \frac{K(k)}{tr(K(k))} + c_2 Q_p$$

Regularized constant trace algorithm for better parameter tracking:
Correct parameter tracking is a key property required here. Doing so indirectly through selection of Qp and Qm, old data are discounted/forgotten. This fact involves compromises: fast discounting makes the estimates uncertain if the parameters are more or less constant and slow discounting makes it impossible to track fast parameter changes. There may be periods with less excitation. The estimator will forget the proper values of parameters and the uncertainty will grow. This is called estimator windup. If there is no excitation for a long period of time, K(k) may be very large. Since K(k) also influences the gain g(k), there may be large changes in the estimated parameters when new information is coming into the system. There are several ways to avoid estimator windup. The main idea is to ensure that K(k) stays bounded. This is done by the fact that the trace (sum of all diagonal elements) of K(k) is kept constant; from experience, c1/c2 should be about $10^4$.

The resulting code incl. a graphical interface may be developed e.g. in Matlab/Simulink environment. For a possible simple implementation in any other software/hardware environment, the developed code may further be rewritten in such a way that the most complex operation used - and required to be carried out with every new set of measured data - is a multiplication of a matrix by a vector as long as the term d is a scalar. This is always true as long as one works with only one input signal. Otherwise, the d-term becomes a matrix which has to be "safely" inverted.

Measures on Prediction Quality (MAPE / VAF)

For the evaluations of quality of the achieved results, it is convenient to introduce scalar measures which help to asses the quality of the prediction - and characterizes it with a single number.

A widely spread measure used typically for the quality of identified dynamic models by control engineers is the so called *"Variance Accounted For"* (VAF). It is defined as follows:

$$VAF = diag(100*(eye(size(Y,2))-var(Y-Ym)./var(Y)))  \;[\%]$$

It returns the percentile measure between two signals. When used to validate models, Y contains the measured data and Ym is the model output. When Y and Ym are matrices, VAF is computed over the corresponding columns. All VAFs below zero are set to zero indicating a very poor match between signals. As a hint, a perfect theoretical match between two identical signals/models yields VAF = 100%, excellent identification results VAF > 90%, very good VAF > 80%.

Another measure can be the *"Mean Average Prediction Error"* (MAPE) which is a measure of accuracy used mainly by statisticians when fitting time series.

$$\text{MAPE} = \frac{1}{n} \sum_{t=1}^{n} \left| \frac{A_t - F_t}{A_t} \right| \; x \; 100 \; [\%]$$

The difference between actual value At and the forecast value $F_t$, is divided by the actual value At again. The value of this calculation is then summed up for every fitted or forecast point and divided by the number of points *n.* It expresses the accuracy as a percentage too where MAPE = 0[%] means the perfect fit. Although the concept of MAPE sounds very simple and convincing it has 2 major drawbacks for practical applications:

• If there are zero values (sometimes happens; for example in demand series) there will be a division by zero, and also
• when having a perfect fit, MAPE is zero but the MAPE has no restrictions with regard to its upper limit

Summarizing, it may be stated that the developed method is principally simple. The entire approach presented here is based on two steps: (A) recursive model identification/update and (B) forecasting. The first step (model update) is based on recursive parameter estimation techniques, an affine ARMAX model and on the assumption that the heat demand can be described sufficiently well as a function of the ambient temperature (input signal) and the social component (regression over past output values which has certain characteristic profile that changes slightly over time). For the second step (heat demand forecasting), a possibly strong correlation between the input signal (e.g. the ambient temperature) and the forecasted heat demand is desired.

The developed method is principally simple: the most complex operation required to be carried out is a multiplication matrix-by-vector. The prediction problem has been reduced to a parameter estimation problem which is then solved with a recursive algorithm that keeps the model behavior "up-to-date". The best results have been achieved with a model parameterization called "affine ARMAX" as described above.

The approach has been evaluated using an available set of real measured data from a pilot customer. The recursive approach applied to reliable data (in the above sense) generates very good predictions (5% MAPE error) of the district heating demand with the proposed affine ARMAX model. It solves the problem of automated tracking of seasonal trends without adding any bizarre Fourier filters tuned for the diurnal (24h) fundamental period, which are utilized in approaches known from the referred literature.

It should be noted that the term "comprising" does not exclude other elements or steps and that the indefinite article "a" or "an" does not exclude the plural. Also elements described in association with different embodiments may be combined. It should also be noted that reference signs in the claims shall not be construed as limiting the scope of the claims.

**Claims**

1. A computer-based method for automatically providing a prediction on a future energy demand to a energy source, the method comprising:

   a) acquiring actual measurement data of an actual ambient condition and of an actual energy demand output of the energy source;
   b) updating an auto-regressive model (AR) of the energy demand based on the acquired actual measurement data;
   c) acquiring forecasted ambient condition data;
   d) calculating the prediction on the future energy demand using the updated regressive model and based on the acquired forecasted ambient condition data;
   e) repeating steps (a) to (d).

2. The method of claim 1, wherein the auto-regressive model (AR) is one of an auto-regressive model (ARMA) with moving average, an auto-regressive model (ARX) with an eXternal input, an auto-regressive model (ARMAX) with moving average and an eXternal input and an auto-regressive model (ARIMAX) with integrated moving average and an eXternal input.

3. The method of claim 1 or 2, wherein the auto-regressive model (AR) is an affine auto-regressive model.

4. The method of one of claims 1 to 3, wherein the regressive model is updated using Kalman filtering techniques and homogeneous transformations.

5. The method of one of claims 1 to 4, wherein the step of calculating the prediction is based on a combination of more than one regressive models.

6. The method of one of claims 1 to 5, wherein the step of calculating the prediction includes as a most complex mathematical operation a multiplication of a matrix by a vector.

7. A method of controlling an energy source, comprising:

   providing a prediction on a future energy demand using the method according to one of claims 1 to 6;
   generating a production plan for controlling a heat generation of the heating source based on the prediction; and
   controlling the heating source in accordance with the generated production plan.

8. A method of controlling an energy source of a power plant, comprising:

   providing a prediction on a future energy demand using the method according to one of claims 1 to 6;
   determining a prediction of a total energy quantity generated by the energy source;
   determining a difference value between the total energy quantity and the predicted future energy demand;
   offering energy generated by the energy source in a quantity corresponding to the difference value for conversion into an alternative energy form.

9. A computing device being adapted for performing the method according to one of claims 1 to 8.

**10.** The computing device of claim 9,
further comprising a data interface for providing data acquired from an external forecasted ambient condition data provider to an internal processing unit.

**11.** The computing device of claim 9 or 10,
further comprising a data interface for providing data of the calculated prediction on the future energy demand to an optimization system for automatically optimizing a production plan for the energy source.

**12.** The computing device of one of claim 9 to 11,
further comprising a data interface for providing data on a difference value between a total energy quantity generated by the energy source and a predicted future energy demand for external use as an offer at an energy market.

**13.** A district heating system comprising:

a heating source;
a computing device according to one of claims 9 to 12.

**14.** A computer program product adapted for performing the method according to one of claims 1 to 8 when executed on a computing device.

**15.** A computer readable medium having stored thereon the computer program product of claim 14.

Fig. 1

Fig. 3

Fig. 2

Europäisches
Patentamt

European
Patent Office

Office européen
des brevets

# EUROPEAN SEARCH REPORT

Application Number

EP 09 17 3228

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/282196 A1 (ABE KEIKO [JP] ET AL) 14 December 2006 (2006-12-14) * figures 1,2,7,12 * * paragraph [0003] * * paragraph [0009] * * paragraph [0031] - paragraph [0032] * * paragraph [0036] * * paragraph [0038] * * paragraph [0041] * * paragraph [0044] * * paragraph [0045] * * paragraph [0049] * * paragraph [0059] * * paragraph [0060] * * paragraph [0061] * * paragraph [0063] * * paragraph [0064] * * paragraph [0065] * * paragraph [0068] * ----- | 1-15 | INV. G06Q10/00 |
| X,D | KORBA P: "Real-time monitoring of electromechanical oscillations in power systems: first findings" 20070101, vol. 1, no. 1, 1 January 2007 (2007-01-01) , pages 80-88, XP006027996 * the whole document * ----- | 1-15 | TECHNICAL FIELDS SEARCHED (IPC) G06Q |

The present search report has been drawn up for all claims

| Place of search | Date of completion of the search | Examiner |
|---|---|---|
| The Hague | 16 March 2010 | Fiorenzo Catalano, M |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    .................................................................................
& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 09 17 3228

This annex lists the patent family members relating to the patent documents cited in the above-mentioned European search report.
The members are as contained in the European Patent Office EDP file on
The European Patent Office is in no way liable for these particulars which are merely given for the purpose of information.

16-03-2010

| Patent document cited in search report | Publication date | Patent family member(s) | Publication date |
|---|---|---|---|
| US 2006282196 A1 | 14-12-2006 | NONE | |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **P. Korba.** Real-Time Monitoring of Electromechanical Oscillations in Power Systems. *IEEE Proceedings, Generation Transmission and Distribution,* 2007, vol. 1, 80-88

- **P. Korba.** Real-Time Monitoring of Electromechanical Oscillations in Power Systems. *IET Proceedings, Generation Transmission and Distribution,* 2007, vol. 1, 80-88